(19) **Europäisches Patentamt**

**European Patent Office**

**Office européen des brevets**

(11) **EP 0 359 084 B2**

(12) # NEW EUROPEAN PATENT SPECIFICATION

(45) Date of publication and mention
of the opposition decision:
**07.01.1998 Bulletin 1998/02**

(45) Mention of the grant of the patent:
**11.05.1994 Bulletin 1994/19**

(21) Application number: **89116310.7**

(22) Date of filing: **04.09.1989**

(51) Int. Cl.$^6$: **B29D 11/00**, B24B 13/00

(54) **Method and apparatus for manufacturing contact lenses**

Verfahren und Vorrichtung zur Herstellung von Kontaktlinsen

Procédé et dispositif pour la fabrication des lentilles de contact

(84) Designated Contracting States:
**DE FR GB**

(30) Priority: **16.09.1988 JP 231969/88**

(43) Date of publication of application:
**21.03.1990 Bulletin 1990/12**

(73) Proprietor:
**SEIKO EPSON CORPORATION
Shinjuku-ku Tokyo-to (JP)**

(72) Inventor:
**Umezaki, Hideaki
c/o Seiko Epson Corp.
Suwa-shi Nagano-ken (JP)**

(74) Representative:
**Hoffmann, Eckart, Dipl.-Ing. et al
Patentanwalt,
Bahnhofstrasse 103
82166 Gräfelfing (DE)**

(56) References cited:
**EP-A- 0 070 006          EP-A- 0 281 754**

• **Instructions-Manual für Unilab-Set, Oktober 1986, Max Gfeller AG**
• **Ablaufanalyse für aussentorische Kotaktlinsen, Oktober 1982, Max Gfeller AG**
• **Fertigungsverfahren für innentorische Flächen, Oktober 1982, Max Gfeller AG**
• **Maschinen für Kontaktlinsen, April 1990, Max Gfeller AG**

EP 0 359 084 B2

**Description**

Field of the Invention

This invention relates to a method for manufacturing a contact lens according to the preambles of claims 1 and 2 and to an apparatus according to the preambles of claims 4 and 5.

Description of the Prior Art

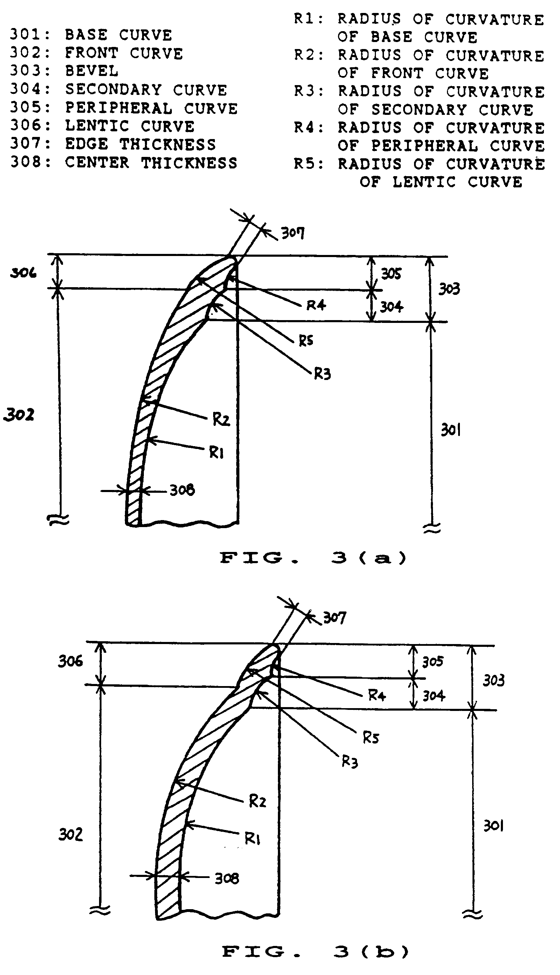

Generally, contact lenses have a shape as shown in Fig. 3(a) or as shown in Fig. 3(b). Fig. 3(a) is a fragmentary sectional view of a minus lens used mainly to correct the visual acuity of near-sightedness, whereas Fig. 3(b) is a fragmentary sectional view of a plus contact lens used mainly to correct the visual acuity of hypermetropia.

As shown in Figs. 3(a) and (b), the contact lens has a curved surface 301 called a base curve on the inner side thereof and another curved surface 302 called a front curve on the opposite side. The radius of curvature $R_1$ of the base curve 301 is determined so as to adapt to the shape of the cornea of a patient's eye, whereas the radius of curvature $R_2$ of the front curve 302 is determined of the basis of the radius of curvature $R_1$ of the base curve 301 and the power necessary for the patient. The minus power lens shown in Fig. 3(a) has the relationship of $R_1 < R_2$, whereas the plus power lens shown in Fig. 3(b) has the relationship of $R_1 > R_2$. Where $R_1 \doteqdot R_2$, the power is substantially O D (diopter).

Formed on the circumference of the base curve 301 is a curved surface 303 called a bevel, and this bevel 303 generally consists of a curved surface 304 called a secondary curve and another curved surface 305 called a peripheral curve. The purpose of the bevel 303 is as follows.

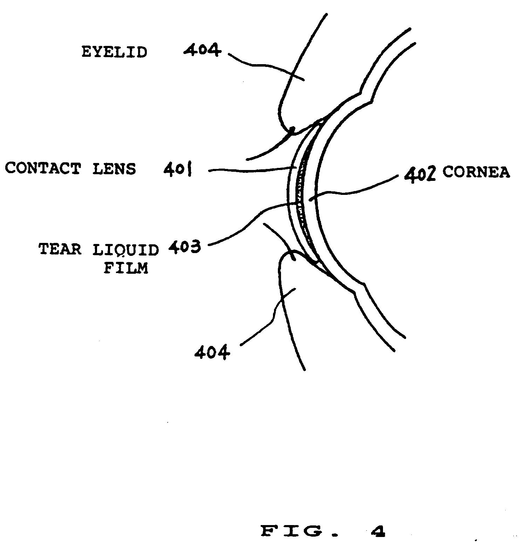

That is, as shown in Fig. 4, the contact lens 401 is used normally in the state wherein a tear liquid 403 is interposed between the contact lens and the cornea 402. Since this tear liquid 403 has the important functions of surface cleaning and sterilization of the cornea 402 and supplying oxygen thereto, the tear liquid 403 lying between the contact lens 401 and the cornea 402 is necessary to be changed with a fresh one. The bevel 303 is provided for the purpose of causing the tear liquid to flow in and out smoothly and making the vertical movement of the lens smooth, thus, its shape is determined on the basis of prescription data, such as the quantity of tear and the peripheral shape of the cornea of the patient. Generally, the relationship of $R_1 < R_3 < R_4$ exists between the radius of curvature $R_1$ of the base curve 301, the radius of curvature $R_3$ of the secondary curve 304, and the radius of curvature $R_4$ of the peripheral curve 305, but sometimes, the case of $R_1 < R_3 = R_4$ exists.

Formed on the circumference of the front curve 302 is a curved surface 306 called a lentic curve. This lentic curve 306 is provided to give a certain value to an edge thickness 307, thus, its shape is determined on the basis of the radius of curvature $R_2$ of the front curve 302 and the value of a center thickness 308. Generally, between the radius of curvature $R_2$ of the front curve and the radius of curvature $R_5$ of the lentic curve there is the relationship of $R_2 > R_5$ in the case of the minus power lens, or the relationship of $R_2 < R_5$ in the case of the plus power lens, but sometimes, the case of $R_2 = R_5$ exists.

It is said from a lot of results of clinical testing that the value of the edge thickness 307, which significantly influences the patient's feeling of comfort, is preferably set to about 0.08 to 0.11 mm for ordinary patients, or about 0.14 to 0.15 mm for patients of advanced age whose eyelid 404 (Fig. 4) has a poor tension. Of course, the edge of the contact lens is finished to a smooth curved surface to prevent damage to the cornea. Similarly, the connecting portion between the base curve and the bevel and between the front curve and the lentic curve is finished to a smooth curved surface.

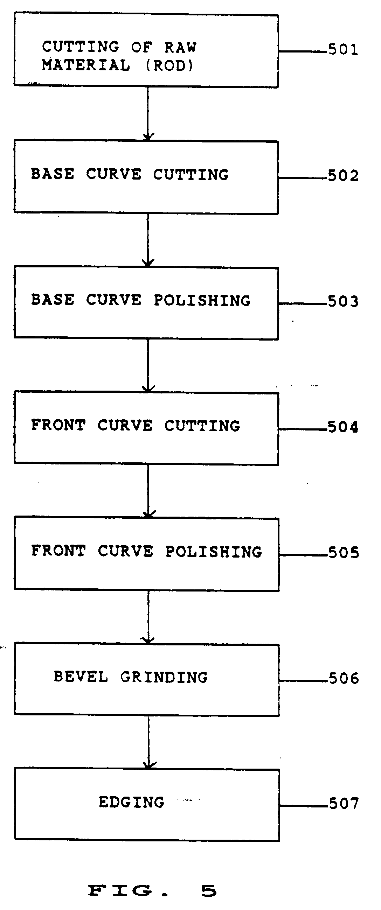

Fig. 5 shows a typical process of the prior art for manufacturing the contact lens.

Hitherto, prior to the manufacturing process of Fig. 5, design data for a desired shape were prepared on the basis of the prescription data of patient's eyes or a predetermined standard specification, and then, manufacture was carried out on the basis of these design data.

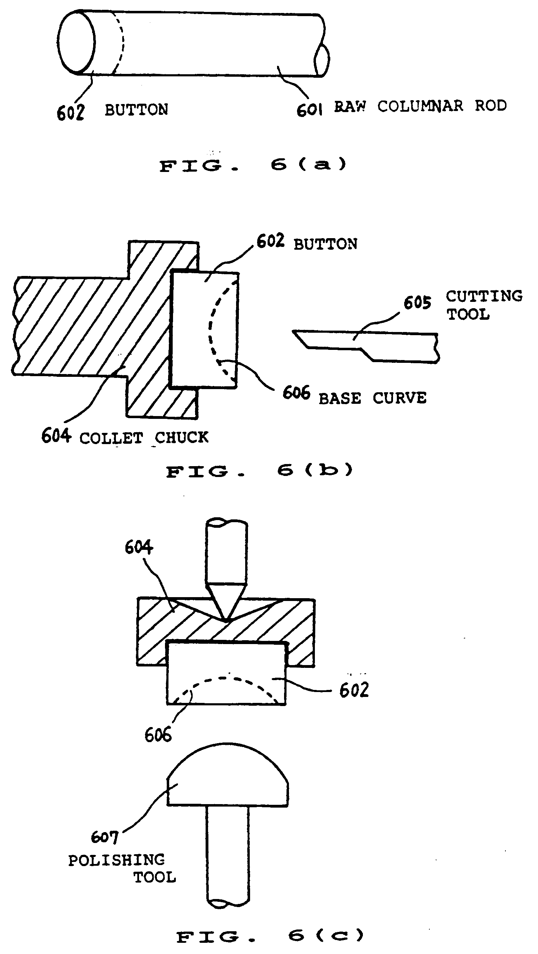

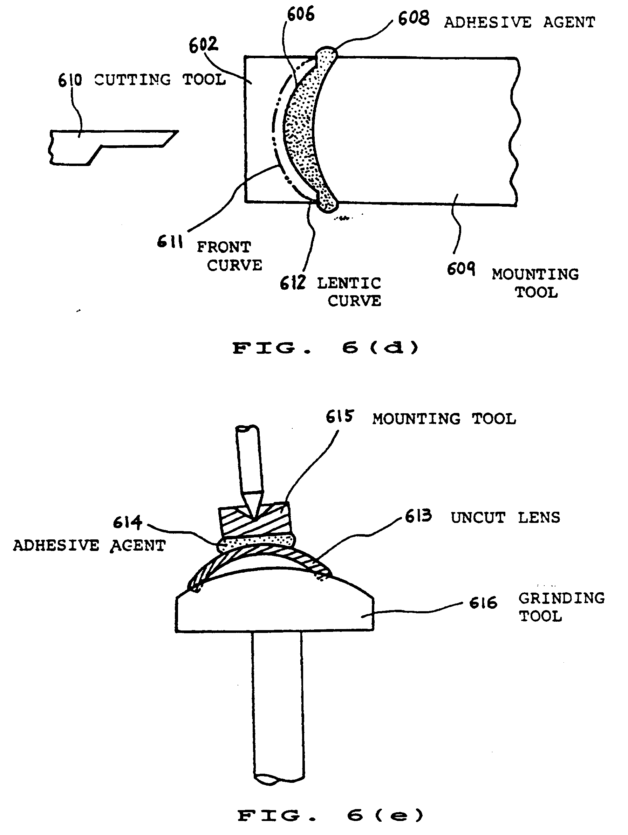

Since a polymer of copolymer of highmolecular monomers which generally is a raw material of the contact lens is supplied in the form of a raw columnar rod 601 as shown in Fig. 6(a), a raw material (rod) cutting step 501 is incorporated to cut the raw rod into *lens blanks forming* buttons 602 having a thickness larger than a finally-required thickness. If the raw material is supplied as buttons 602, this first step is omitted.

A base curve cutting step 502 is to cut the button 602 to form the base curve, that is, as shown in Fig. 6(b), a button 602 is secured to a collet chuck 604 and cut by the use of a cutting tool 605 attached to a highprecision CNC lathe or the like, whereby a base curve 606 of desired shape is formed (c.f. for instance *Mandell, Robert B., "CONTACT LENS PRACTICE", Charles C. Thomas Publisher, 3. Edition, 1981, p. 465*).

A base curve polishing step 503 is to polish the surface of the base curve to finish to an optical surface, that is, as shown in Fig. 6(c), polishing is carried out by the use of a peculiar polishing tool 607 whose surface shape accords with the desired shape of the base curve. Where the base curve is to have an aspheric surface, sometimes, a very small polishing pad is used.

A front curve cutting step 504 is to cut the surface opposite to the base curve to form the front curve and the lentic curve, that is, as shown in Fig. 6(d), the base curve side of the button is blocked to a mounting tool 609 with an adhesive agent 608 and the opposite side cut by the use of a cutting tool 610 attached to the high-precision CNC lathe or the like as in the case of the base curve machining, to form the front curve 611 and the lentic curve 612 of desired shape. Then, in a front curve polishing step 505, polishing is carried out by the use of a peculiar polishing tool as in the case of the base curve polishing, to finish to an optical surface.

When a desired shape or a desired lens power could not be obtained owing to a machining error brought in during the base curve and/or front curve machining, sometimes, grinding is carried out also during the polishing step to change the shape to thereby correct the error. The thus obtained lens having a desired power is called an uncut lens in general.

In a bevel grinding step 506, as shown in Fig. 6(e), an uncut lens 613 is blocked to a mounting tool 615 with an adhesive agent 614 or the like and a circumferential portion of the uncut lens 613 is ground by the use of a peculiar grinding tool 616 having a surface shape conforming to the prescription data of the patient to form the bevel of desired shape, and further, the circumference is cut so as to have a desired lens diameter. This step generally consists of forming the secondary curve, forming the peripheral curve, and cutting the circumference.

Finally, in an edging step 507, the edge and the blend portions between the individual curved surfaces are polished and ground to finish to smooth curved surfaces.

In general, since the shape of the human eye differs from person to person, it is ideal to manufacture individual contact lenses so as to best adapt in shape to individual patients on the basis of the prescription data of the patients. However, in view of the maker's demand that the efficiency of mass production be enhanced to reduce the manufacturing cost and the user's demand for immediate use, the distribution system is now practically adopted wherein standard shapes adapted for a large number of patients are prepared on the basis of many results of clinical testing and standard products are previously manufactured that are stocked in ophthalmic hospitals and retail stores.

One problem with manufacture of the contact lens is that the manufacturing cost is extremely high. Tries to enhance the mass production efficiency and reduce the manufacturing cost by determining the specifications of standard products have been practiced hitherto as described above. However, for typical standard products, the radius of curvature of the base curve varies within the range of 7.00 mm to 8.50 mm with a step of 0.05 mm, the power varies within the range of ± 10.00 D with a step of 0.25 D, and the shape and outer diameter of the bevel, edge thickness, center thickness, etc. vary also. Therefore, the number or kinds of lenses to be prepared as stocks becomes as large as some thousands, this meaning typical multiitem small-quantity production; thus, the production efficiency is poor and it is impossible to reduce the manufacturing cost.

Further, even where a large number of kinds of standard products are prepared, they can satisfy only about 90% of all patients, so that for the remainder or about 10% of the patients, it is necessary to manufacture each contact lens so as to have a shape adapted to each patient through ordering. To satisfy each order, additional peculiar tools conforming to individual shapes must be prepared, thus increasing the manufacturing cost and elongating the time necessary for settling the order.

Another problem with manufacture of the contact lens is that it is difficult to maintain a high degree of accuracy as required and the yield of manufacture is bad. Especially, it is difficult to manufacture the contact lens having a desired power with high accuracy.

The power of the contact lens can be expressed strictly by a function of the radius of curvature $R_1$ of the base curve, the radius of curvature $R_2$ of the front curve and the center thickness, but conventionally, a simple method is adopted in which the difference between the surface refractive power of the front curve and the surface refractive power of the base curve is calculated. The surface refractive power d ( unit: D ) of each curved surface is expressed by

$$d = 1000 \, (n - 1) / R$$

where n is the refractive index peculiar to a polymer or copolymer of highmolecular monomers which is the raw material of the contact lens, this index varying depending on the composition of the raw material used and being in the range of about 1.40 to 1.50 ( =n ), and R is the radius of curvature ( unit: mm ) of the curved surface.

Assuming that the refractive index n of the contact lens raw material is 1.45 and the radius of curvature $R_1$ of the base curve is 8.00 mm, the surface refractive power $d_1$ of the base curve becomes

$$d_1 = 1000 \, ( 1.45 - 1 ) / 8.00$$
$$= 56.25 \, ( D )$$

In this connection, to obtain a power of, for example, - 2.00 D, the surface refractive power $d_2$ of the front curve must be 54.25 ( D ); consequently, the front curve must be machined so as to have the following radius of curvature $R_2$:

$$R_2 = 1000 (1.45 - 1) / 54.25$$
$$\doteq 8.295 (mm)$$

However, the machining accuracy for the base curve and front curve is limited to about ± 0.01 mm in terms of the radius of curvature even if a best-precision CNC lathe now available is used and severe accuracy management is practiced. That is, if an error of +0.01 mm occurs during the machining of the base curve and its radius of curvature $R_1$ becomes 8.01 mm, the surface refractive power of the base curve becomes 56.18 D, resulting in an error of -0.07 D with respect to the design value. Since the allowable error of the power is ±0.12 D, the above error falls within the allowable range. However, if an error of -0.01 mm occurs additionally during the machining of the front curve and its radius of curvature $R_2$ becomes 8.285 mm, the surface refractive power of the front curve becomes 54.32 D, and the power of the lens becomes

$$54.32 - 56.18 = -1.86 (D)$$

This value shows an error of +0.14 D with respect to the design value, exceeding the allowable range of error.

In this way the error of the power is an accumulation of the machining error arising during the machining of the base curve and the machining error arising during the machining of the front curve, so that the possibility of the allowable error being cleared is as low as about 50% to 60%, this making the yield bad.

To overcome the foregoing drawback, hitherto, at least one of the base curve and the front curve was ground to change its shape after the machining of the base curve and front curve as described above so that the error of the power can be decreased so as to fall within the allowable error limit to improve the yield, this technique being called "power change". This technique, however, apparently needs an additional step, thereby increasing the manufacturing cost. Further, since this technique is used to make the power converge to an intended value, it is necessary to rely on the experience and feeling of skilled workers, thus, no reliable accuracy can be attained.

Further, since the base curve and the bevel are portions which come into contact with the cornea of the patient's eye, their shapes are significant for the purposes of improving the feeling of fitting of the contact lens and preventing the afflux of blood to the eye or its inflammation resulting from the use of the contact lens, thereby enhancing medical safety; thus, the accuracy as demanded is very severe.

However, the conventional manufacturing method has the following problems because the machining of the bevel is carried out after the machining of the base curve and front curve as shown in Fig. 5.

That is, since the thickness of the contact lens raw material when the base curve and front curve have been machined is very small and lies in the range of about 0.08 to 0.15 mm as described above, upon the pressing of the grinding tool as shown in Fig. 6(e), its stress causes a deformation of the contact lens raw material, thereby preventing accurate formation of the bevel. Since this forming step was hitherto carried out while considering the degree of deformation by the use of the long-term experience and feeling of skilled workers, this manufacturing method provides a very low productivity and a very bad yield.

Further, the foregoing conventional manufacturing method has the following problems.

That is, the polishing of the base curve, front curve, etc. was hitherto carried out using peculiar certain-shaped polishing tools to maintain a demanded accuracy. Therefore, separate polishing tools must be prepared which are adapted in shape individually to the base curve, secondary curve, peripheral curve, front curve and lentic curve, this increasing the number of kinds of polishing tools correspondingly to the kinds of lenses, increasing the manufacturing cost, and demanding changing of the polishing tools upon the changing of the kind of lens, thereby lowering the productivity.

According to the conventional method, the base curve is machined and polished with the side of the front curve secured as shown in Fig. 6(b), the front curve and lentic curve are machined and polished with the side of the base curve blocked as shown in Fig. 6(d), and then, the bevel is machined with the side of the front curve again secured as shown in Fig. 6(e). Therefore, there are three steps of securing the contact lens raw material. Consequently, since the work of securing the lens also involves an error in relation to the securing position, this error is accumulated in response to the repetition of such a step three times; as a result, the possibility of the shape defectiveness, such as prism defectiveness and eccentric defectiveness, exceeding the allowable limit owing to the error of the securing position increases to lower the yield.

Especially, since the shape of the base curve differs depending on the kind of lens, the securing position tends to shift when the side of the base curve is secured as shown in Fig. 6(d), as a result, the machining position of the front curve deviates, and the optical axis of the front curve comes out of agreement with that of the base curve; thus, the prism defectiveness results and/or the error of the center thickness exceeds the allowable limit.

Similarly, the positional shift tends to occur also when the side of the front curve is secured as shown in Fig. 6(e); as a result, there appears the eccentric defectiveness, or the position of the bevel deviates eccentrically, thereby lowering the accuracy in shape of the bevel.

The document EP-A-0 070 006 discloses manufacturing of a contact lens by machining the base curve and subsequently machining the front curve, each machining step including a cutting step with or without a polishing step after the cutting step. In this prior art both machining steps are performed on the basis of given design data. The document describes that after each machining step appropriate quality control checks and inspections are performed.

The document EP-A-0 281 754 discloses a method and an apparatus for making prescription eyeglass lenses and is concerned with the shaping of one of the major surfaces by cutting and polishing a lens blank only.

The Instruction Manual for the UNILAB-SET of Unilab AG, Kontaktlinsen-Service, Morgarten; published October 1986, discloses a method and an apparatus for manufacturing a contact lens by machining a lens blank to a desired shape, comprising

a) a first machining step of forming a base curve and a bevel having given shapes, on the basis of first given design data,
b) a second machining step of forming the front curve and, if necessary, a lentic curve, and
c) a measuring step of measuring the radius of curvature of the base curve formed in step a) and calculating, based on the measured radius of curvature, the radius-of-curvature data of the front curve required to attain a desired refractive power,
wherein step b) is executed on the basis of the radius-of-curvature data calculated in step c).

Afterwards, the lens is polished.

## SUMMARY OF THE INVENTION

The present invention has been devised to solve the foregoing problems of the prior art, thus, it is an object of the present invention to provide a manufacturing method and a manufacturing apparatus which are capable of quickly manufacturing any contact lenses of desired shapes with high machining accuracy without increasing the manufacturing cost thereof.

This object is solved with a manufacturing method as claimed in claims 1 and 2, respectively, and an apparatus as claimed in claims 4 and 5, respectively.

Specifically, in the first manufacturing method of the present invention, the design data relating to the shape of the contact lens, which include the desired power, radius of curvature of the base curve, radius of curvature of the front curve, diameter, center thickness, edge thickness, radius of the lentic curve, shape of the bevel, etc., are calculated on the basis of the predetermined standard specification and/or the prescription data of patient's eyes.

Ways of carrying out the invention are described in detail below with reference to drawings which illustrate only specific embodiments.

## BRIEF DESCRIPTION OF THE DRAWINGS

| Fig. 1 | is a diagram showing the process of a contact lens manufacturing method |
| Fig. 2 | is a diagram showing the configuration of a contact lens manufacturing apparatus |
| Figs. 3(a) and (b) | are fragmentary sectional views of a minus lens and a plus lens, respectively, which are typical contact lenses; |
| Fig. 4 | is a diagram showing a contact lens fitted to an eye; |
| Fig. 5 | is a diagram showing a conventional contact lens manufacturing process; |
| Fig. 6(a) through (e) | are diagrams showing important manufacturing steps of the prior art; |
| Fig. 7 | is a diagram showing a precision CNC lathe usable in the grinding step of the present invention; |
| Fig. 8 | is a diagram showing a contact lens with a base curve and a bevel formed therein according to the present invention; |
| Figs. 9(a) and (b) | are diagrams showing polishing means adapted for a base curve and a bevel and for a front curve and a lentic curve, respectively, according to the present invention; |
| Fig. 10 | is a diagram showing a measuring method of the radius of curvature of a base curve according to the present invention; |
| Fig. 11 | is a diagram showing a *lens blank* blocking method according to the present invention; |
| Fig. 12 | is a diagram showing an edge machining means according to the present invention; and |
| Fig. 13 | is a diagram showing an automated contact lens manufacturing line according to the present |

invention.

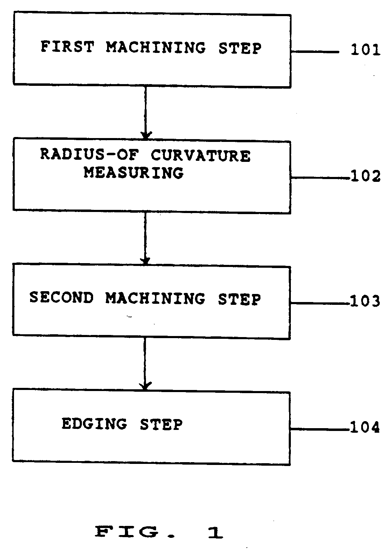

As shown in Fig. 1, in the first machining step 101, the base curve and the bevel are formed on the basis of the design data; in the radius-of-curvature measuring step 102, the radius of curvature of the base curve formed in the first machining step 101 is measured, the design data of the front curve for attainment of a desired power are calculated or the deviation from the foregoing design data is measured on the basis of the measurement data, and the design data of the front curve are calculated by amending the design data of the front curve.

In the second machining step 103, the front curve and the lentic curve are formed on the basis of the design data. Here, since the radius of curvature of the lentic curve sometimes becomes equal to the radius of curvature of the front curve, in this case the front curve only is formed.

Finally, in the edging step 104, the shape of the edge is machined to a smooth curved surface, whereby the contact lens is completed.

The machining method of the present invention is featured in that in the polishing step of the first machining step 101 and of the second machining step 103, a soft polishing cloth deformable to any shape is pressed against the *lens blank* while causing relative motion between the polishing cloth and the *lens blank*, thus, it is possible to carry out polishing with the same means and manhour and with high accuracy irrespective of the shape of the contact lens.

The second manufacturing method of the present invention is identical with the first manufacturing method except that in the first machining step 101, the front curve, together with the lentic curve if necessary, is formed; the radius-of-curvature measuring step 102, the radius of curvature of the front curve is measured; and in the second machining step, on the basis of the measurement result, the base curve and the bevel are formed.

Although the first machining step 101 and the second machining step 103 generally are each composed of the cutting step of cutting the contact lens raw material and the polishing step of polishing the curved surface formed by cutting, it is not necessary to limit to them if a desired shape can be formed. Further, the edging step 104 can be omitted if the machining of the edge is adequately carried out concurrently in either the first machining step 101 or the second machining step 103.

The third manufacturing method of the present invention is featured in that when to block the *lens blank* to the given mounting tool for the purpose of forming the front curve and the lentic curve in the second machining step 103 after the formation of the base curve and the bevel in the first machining step 101 of the first manufacturing method, the necessary amount of adhesive agent is calculated on the basis of the shape of the base curve of the *lens blank*, the shape of the mounting tool, and the height of adhesion necessary to machine and form the front curve at a proper position, and then, the calculated amount of adhesive agent only is discharged from a storage vessel to bond and block the *lens blank* to the mounting tool, whereby it is possible to secure the *lens blank* at a proper position with high accuracy irrespective of the shape of the base curve.

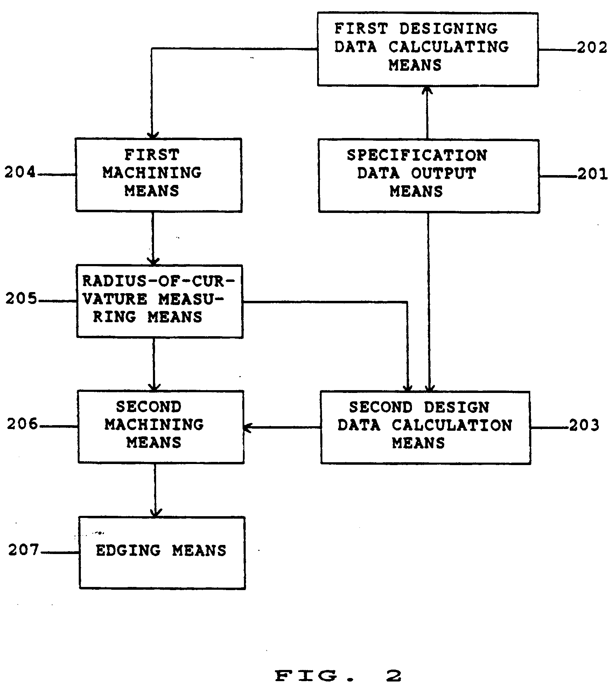

On the other hand, in the first manufacturing apparatus of the present invention as shown in Fig. 2, the specification data output means 201 selects, in accordance with a manufacturing sequence, one out of a plurality of specification data sets entered and supplies it to the first design data calculating means 202 and the second design data calculating means 203.

On the basis of these specification data, the first design data calculating means 202 calculates the first design data for the machining of the base base curve and the bevel to given shapes.

On the basis of these first design data, the first machining means 204 machines the contact lens raw material to form the base curve and the bevel and sends the contact lens raw material having been machined to the radius-of-curvature measuring means 205.

The radius-of-curvature measuring means 205 measures the base curve, transfers the measurement data to the second design data calculating means 203, and sends the contact lens raw material having been measured to the second machining means 206.

On the basis of the measurement data and the specification data, the second design data calculating means 203 calculates the second design data for the machining of the front curve, and the lentic curve if necessary, to given shapes.

On the basis of these second design data, the second machining means 206 machines the contact lens raw material sent from the radius-of-curvature measuring means 205 to form the front curve, and the lentic curve if necessary, and sends the contact lens raw material having been machined to the edging means 207.

The edging means 207 machines the edge of the contact lens raw material to a smooth curved surface, whereby the contact lens is completed.

The second manufacturing apparatus of the present invention is identical with the first manufacturing apparatus except that the first design data calculating means 202 calculates the first design data for the machining of the front curve, and the lentic curve if necessary, to given shapes; the first machining means 204 forms the front curve, and the lentic curve if necessary; the radius-of-curvature measuring means 205 measures the radius of curvature of the front curve; the second design data calculating means 203 calculates the second design data for the machining of the base curve and the bevel to given shapes on the basis of the measurement data and the specification data; and the second machining means 206 forms the base curve and the bevel.

Although the first machining means 204 and the second machining means 206 generally are each composed of cutting means such as a high-precision CNC lathe and polishing means for polishing a curved surface formed by cutting, it is not necessary to limit to them if the means can form a desired shape. Further, the edging means 207 can be omitted if the first machining means 204 or the second machining means 206 is made of adequate means capable of carrying out the machining of the edge concurrently.

Further, an unmanned automated manufacturing line can be realized if the specification data calculating means 201, first design data calculating means 202, and second design data calculating means 203 are made of a computer which includes a program for causing it to calculate necessary data automatically and if the first machining means 204, radius-of-curvature measuring means 205, second machining means 206, and edging means 207 are connected together by contact lens raw material auto-conveying means.

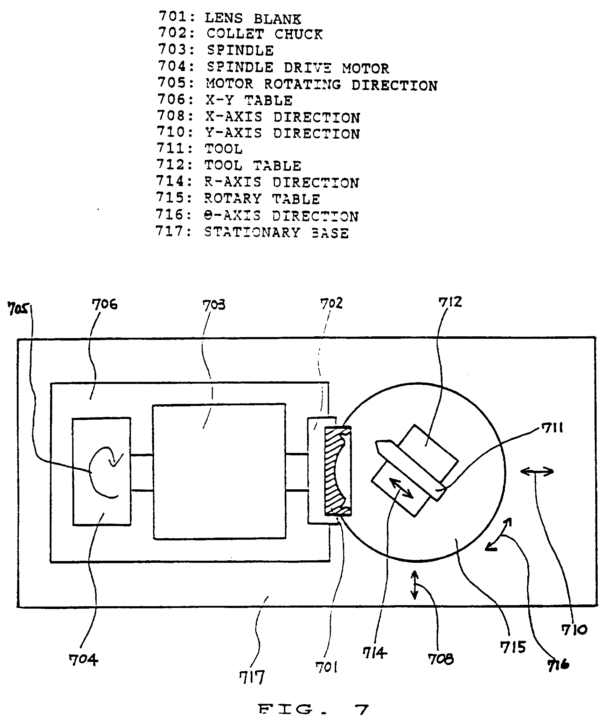

Fig. 7 shows a precision CNC lathe usable in the cutting step of a contact lens raw material according to the present invention. The contact lens raw material (hereinafter referred to as a *lens blank*) 701 to be machined is secured to a collet chuck 702 in a manner similar to the conventional method shown in Fig. 6(b), and this collet chuck 702 is secured to a spindle 703. This spindle 703 is rotated at a certain speed in the direction of the arrow 705 by a spindle drive motor 704, and in response thereto, the *lens blank* 701 is also rotated at a certain speed in a given direction. The spindle drive motor 704 is mounted on an X-Y table 706, so that by shifting the X-Y table 706 in the directions of the arrow 708 or X-axis direction and in the directions of the arrow 710 or Y-axis direction, the coordinate position along the X-axis and Y-axis of the *lens blank* 701 is controlled. A cutting tool 711 made of a diamond or the like is mounted on a tool table 712, so that by shifting the tool table 712 in the r-axis direction of a polar coordinate system or in the directions of the arrow 714, the coordinate position along the r-axis of the tool table 712 is controlled. The tool table 712 is supported shiftably on a rotary table 715, so that by rotating the rotary table 715 in the directions of the arrow 716, the coordinate position along the $\Theta$-axis of the polar coordinate system or the rotational angle of the tool table 712 is controlled. The shiftable table 706 and the rotary table 715 are supported on a stationary base 717 shiftable and rotatably, respectively. Therefore, by controlling the amount of shift (the rotational angle), the direction of shift (the direction of rotation), and the timing of shift or rotation of each of the X-Y table 706, tool table 712, and rotary table 715 by the use of control means such as servo motors (not shown) on the basis of given design data, it is possible to form the base curve, bevel, front curve, and lentic curve of given shapes.

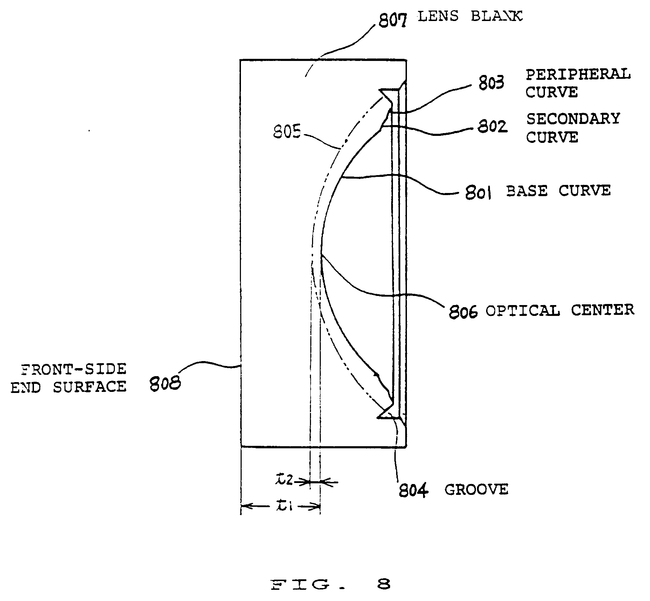

Fig. 8 shows an example of the *lens blank* whose base curve and bevel were concurrently formed by the use of the cutting means as shown in Fig. 7. This example is a standard product whose base curve and bevel were formed prior to the front curve and lentic curve, and whose parameters are: the diameter = 9.0 mm, the base curve = 7.8 mm, and the power = - 4.00 D. In the case of standard products, other parameters, such as the shapes of the bevel and lentic curve, the center thickness, and the edge thickness, are determined in accordance with given design data based on the foregoing specification data. In this cutting step, as shown in Fig. 8, a groove 804 defining the diameter of the lens was formed concurrently with the formation of the base curve 801, secondary curve 802, and peripheral curve 803 for defining the bevel. Of course, the individual connecting portions between the base curve 801, secondary curve 802, and peripheral curve 803 are finished into smooth curved surfaces. (This is called "blend".) The groove 804 is formed at a position such that when the front curve and lentic curve are formed in a subsequent step so as to correspond to the dotted line 805, the outer diameter becomes 9.05 mm. With this provision, it became possible to finish the final outer diameter obtained by forming the shape of the edge into a smooth curved surface through edge machining to 9.0 mm.

Further, by forming the base curve 801 such that the distance $t_1$ from the optical center 806 or most deep portion of the base curve 801 to the front-side end surface 808 of the *lens blank* 807 take a certain value, it became possible to finish the center thickness $t_2$ of the lens after the formation of the front curve to just the design value.

Here, although depending on the blocking method, it is preferable that the distance $t_1$ be about 2 to 3 mm for the purpose of preventing flexure or deformation of the lens during the machining of the base curve.

It became possible to make the shape accuracy or surface waviness on the meridian of the base curve 801 less than 0.15 µm by the use of the cutting means as shown in Fig. 7, and to make the surface roughness less than 0.1 µm by increasing the rotational speed of the spindle 703 to more than 10000 rpm; thus, a value of ± 0.01 mm was attained for the machining error of the radius of curvature.

Further, by concurrently cutting the base curve 801 and the bevel or both the secondary curve 802 and the peripheral curve 803, it became possible to prevent the eccentricity of the bevel that was caused in the prior art owing to the difference between the blocking position to the fixture during the machining of the base curve and that during the machining of the bevel, thus it became possible to form the base curve and the bevel with very high shape accuracy.

Having described the machining of the base curve and the bevel hereinabove as an example, it goes without saying that the machining of the front curve and the lentic curve can also be carried out with similar machining accuracy by the use of the cutting means shown in Fig. 7.

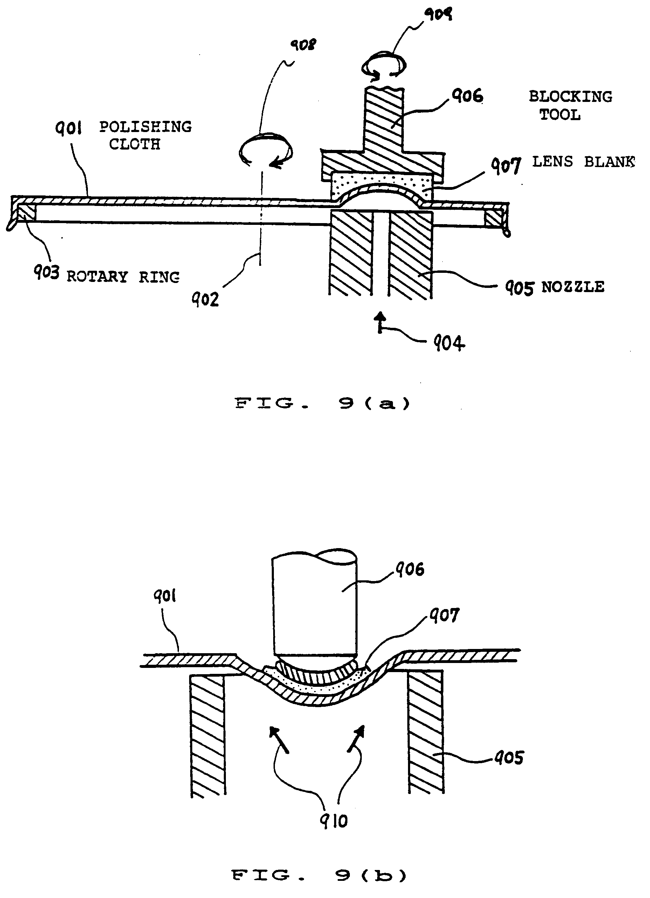

Fig. 9(a) shows a polishing means for optical polishing the surfaces of the base curve and the bevel, by such means as the cutting means shown in Fig. 7.

901 is a polishing cloth mounted to a rotary ring 903 supported rotatably about the center of rotation 902. This polishing cloth 901 is made of a soft material deformable into any shape, which is pressed substantially uniformly against the surface of the *lens blank* 907 blocked to the blocking tool 906 by virtue of the pressure of a fluid, such as compressed air, the fluid being blown against the back side of the polishing cloth 901 through a nozzle 905 as illustrated by the arrow 904. The polishing means of the embodiment polishes, while supplying an abrasive agent onto the surface of the polishing cloth 901 under the foregoing condition, the surface of the base curve and the surface of the aspherical bevel concurrently by rotating the rotary ring 903 in the direction of the arrow 908 and at the same time, rotating the *lens blank* 907 in the direction of the arrow 909, i.e. in the direction opposite to the direction of rotation of the rotary ring 903.

The material of the polishing cloth 901 is not necessary to be limited as long it is deformable into any shape, and has moderate resiliency and some degree of softness not damaging the surface being polished.

The efficiency of polishing, i.e. the time necessary for polishing and the uniformity of polishing depend on the relative speed between the polishing cloth 901 and the surface being polished that is determined by the rotational speeds of the rotary ring and the *lens blank*, the pressure of the fluid, etc. The rotational speed of the rotary ring 903, although differing depending on the outer diameter of the rotary ring, desirably should fall within the range of about 0.5 to 5 rpm where the outer diameter is 30 cm, and the desirable rotational speed of the *lens blank* 907 is within the range of about 1.5 to 25 rpm. The pressure of the fluid desirably should fall within the range of about $1 \times 10^5$ to $5 \times 10^5$ Pa (1 to 5 kp/cm$^2$). With these, it is possible to obtain a desired optical surface in an abrasion time of 15 to 30 seconds.

By the use of the polishing means wherein the outer diameter of the rotary ring 903 is 30 cm, its rotational speed is 1 rpm, and the rotational speed of the *lens blank* 907 is 3 rpm, a desired optical surface was obtained in about 25 seconds through polishing by using a polishing cloth on sale backed with a polyethylene sheet as the polishing cloth 901, supplying a powder of $Al_2O_3$ dispersed in water as the abrasive agent, and pressing the polishing cloth 901 against the *lens blank* 907 of 12.5 mm in outer diameter with the base curve of 7.80 mm in radius of curvature formed therein by applying a compressed air of $19.6 \times 10^4$ Pa (2.0 kp/cm$^2$) in pressure.

As described above, by the use of the polishing means as shown in Fig. 9(a), it is possible to uniformly press the polishing cloth 901 against the *lens blank* by means of fluid pressure even where the base curve and bevel have any shapes, the polishing can be carried out with high accuracy, and there is no need to prepare any peculiar polishing tool corresponding in shape to the surface being polished in contrast to the prior art, thereby eliminating the step of changing such a tool; accordingly, it became possible to remarkably reduce a proportion of the manufacturing cost necessary for the polishing step.

Further, it became possible to quickly deal with any lenses of special shapes non-predictable as is the case of order made products.

Having described the polishing of the base curve and the bevel hereinabove, it goes without saying that the polishing of the front curve and the lentic curve can be carried out similarly.

Fig. 9(b) shows an example. This is fundamentally identical with that shown in Fig. 9(a). But, the front curve is convex in a central portion in contrast to the base curve; thus, the fluid pressure in a peripheral portion is relatively low, tending to make it impossible to provide a uniform pressing force. Accordingly, the inner diameter of the nozzle 905 is made larger than the outer diameter of the *lens blank* 907 so that the fluid can be blown uniformly against the whole surface being polished as illustrated by the arrows 910, this being a different point. With this provision, a similar degree of polishing accuracy to that of the polishing of the base curve was obtained in a similar time.

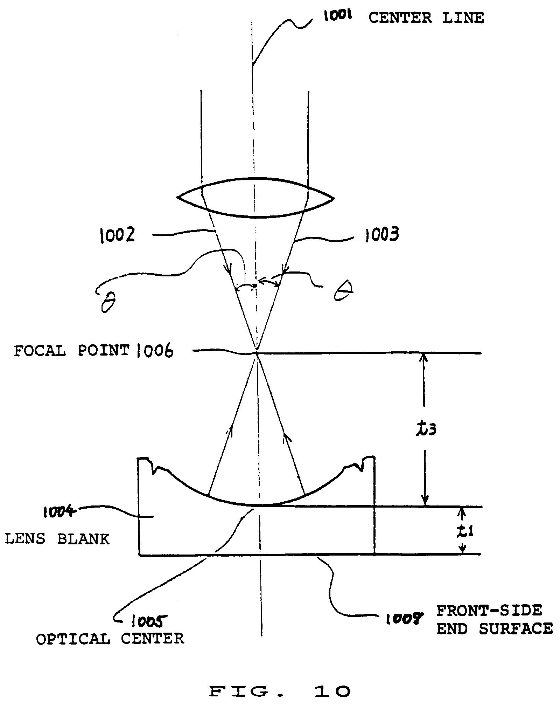

Fig. 10 shows a measuring method of measuring the base curve.

In Fig. 10, the measuring method uses a conventional optical radius-of-curvature measuring device. The device includes an optical system for generating a spherical wave having a focal point 1006 and traveling in parallel to a center line 1001, and is configured so that where beams 1002 and 1003 inclined by an angle $\Theta$ with respect to the center line 1001 enter and reflect symmetrically and where they reflect along their incident paths as they are, a reticular target is clearly focused. Therefore, when the optical center 1005 of the *lens blank* 1004 is at the focal point 1006, the incident beams 1002 and 1003 reflect to the opposite sides, whereas when the optical center 1005 of the *lens blank* 1004 is spaced away from the focal point 1006 by a distance corresponding to the radius of curvature, the incident beams 1002 and 1003 reflect along their incident paths as they are. Therefore, the radius of curvature can be obtained by measuring the distance $t_3$ between the two points at which the reticular target is clearly focused.

Further, the distance $t_1$ from the optical center 1005 to the front-side end surface 1007 can be readily measured.

Using the foregoing measuring method, it became possible to measure the radius of curvature of the base curve with an accuracy of $\pm 0.002$ mm, and by calculating the radius of curvature of the front curve on the basis of the foregoing measurement result and machining the *lens blank*, it became possible to manufacture the contact lens having a desired power with a yield of more than 99%.

Similarly, by measuring the distance $t_1$ from the optical center 1005 to the front-side end surface 1007, it became possible to eliminate the error of the center thickness attributable to the error arising during the machining of the base curve, and similarly, it became possible to manufacture the contact lens having a desired center thickness with a yield of more than 99%.

As shown in Fig. 10, the radius of curvature of the base curve can be obtained by shifting the *lens blank* 1004 downward beyond an intersection point 1006, and it goes without saying that the radius of curvature of the front curve can be obtained similarly by shifting the *lens blank* reversely upward.

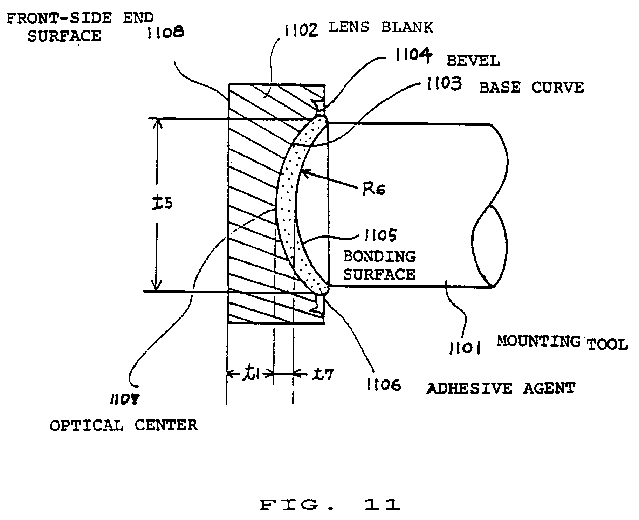

Fig. 11 shows a securing method of blocking the *lens blank* with the base curve and the bevel having been machined and formed to a given mounting tool 1101 in preparation for the machining and forming of the front curve and the lentic curve.

The mounting tool 1101 is a common tool having an outer diameter of given size and a bonding surface 1105 of given radius of curvature $R_6$, which is used irrespective of the shape of the base curve 1103 and of the bevel 1104 of the *lens blank* 1102. The dimensions of the mounting tool used in the embodiment are: the outer diameter = 7.00 mm, and the radius of curvature $R_6$ of the bonding surface 1105 = 7.30 mm. The *lens blank* 1102 is blocked to the mounting tool 1101 with an adhesive agent 1106. For the adhesive agent being used it is necessary to have thermoplasticity to make it easy to separate the *lens blank* 1102 from the mounting tool 1101 after machining and it is preferable if it has high viscosity and exhibits only a small variation in volume during cooling and solidifying for the purpose of improving the positioning accuracy at the time of blocking. In the embodiment, a mixture of paraffin, colophony, EVA, etc. was used.

The blocking method of the embodiment is characterized in that the thickness $t_7$ of a bonding portion is calculated on the basis of the radius of curvature of the base curve 1103 and its effective diameter $t_5$, and the distance $t_1$ from the optical center 1107 to the front-side end surface 1108 of the *lens blank* 1102 so as to make constant the distance $t_6$ from the bonding surface 1105 of the mounting tool 1101 to the front-side end surface 1108 of the *lens blank* 1102, and that a necessary amount adhesive agent is calculated and obtained on the basis of the volume of the space determined by the outer diameter of the mounting tool 1101, the radius of curvature of the bonding surface 1105, the radius of curvature of the base curve and its outer diameter $t_5$, and the thickness $t_7$ of the bonding portion. Consequently, the thus obtained amount of adhesive agent is precisely discharged form a storage container or the like and dropped on the center of the bonding surface 1105 of the mounting tool 1101, the *lens blank* 1102 is depressed to a given height, and then, the adhesive agent 1106 is solidified.

In this way, it became possible to make constant the height of adhesion or the distance $t_6$ from the bonding surface 1105 to the front-side end surface 1108, irrespective of the shape and machining error of the base curve 1103 of the *lens blank* 1102, because the necessary amount of adhesive agent was calculated on the basis of the shape of the mounting tool and of the *lens blank*; thus, it became possible to machine the front curve and center thickness to a desired shape and value with very high accuracy.

Further, since it became possible to make an outer end portion of the adhesive agent 1106 accord with the connecting portion between the base curve 1103 and the bevel 1104, it was not necessary to perform re-mounting for edging after the front curve and the lentic curve had been machined, and the edging could be carried out under the preceding blocked condition; accordingly, it became possible to prevent the edge portion form involving any eccentrical defectiveness.

In the embodiment, the discharge amount of the adhesive agent is controlled, in consideration of the machining and measurement errors of the radius of curvature and the outer diameter of the base curve and the error of the discharge amount of adhesive agent, such that the outer end portion of the adhesive agent 1106 is not located inside the blending zone between the base curve 1103 and the bevel 1104 or such that the outer end portion of the adhesive agent 1106 protrudes at least 0.1 to 0.2 mm outward from the blending zone even where the amount of the adhesive agent is appreciably small.

If the outer end portion of the adhesive agent is located inside the blending zone, stress is imposed on the *lens blank* during the cutting and/or polishing of the front curve and the lentic curve; as a result, the optical surface of the base curve deforms to cause minute optical distortion. Although optical distortion appearing in the bevel makes no matter because the bevel has no optical function, such distortion appearing in the base curve portion degrades the optical function of the contact lens, resulting in some problems.

In the embodiment, as described above, the amount of the adhesive agent is controlled such that the outer end portion of the adhesive agent protrudes outward from the blending zone between the base curve and the bevel; therefore, the foregoing problem does not occur.

Further, since the adhesive agent is confined inside the circumference of the contact lens, re-mounting is not required at the time of edging hereinafter described; thus, it became possible to simplify the manufacturing process and remarkably enhance the machining accuracy and the yield.

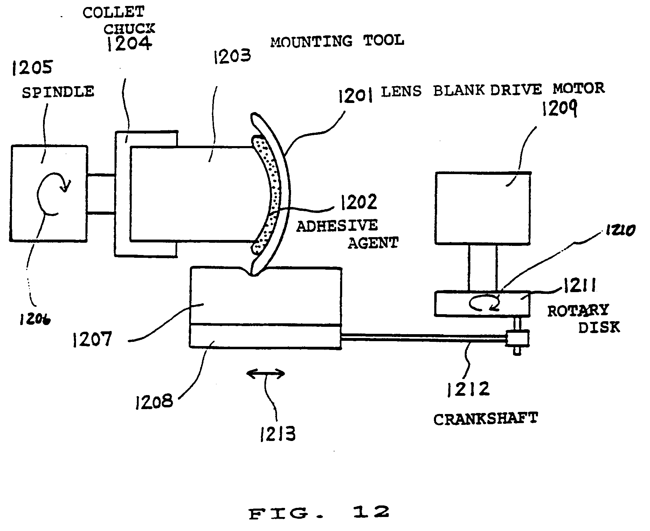

Fig. 12 shows an edging means for machining the shape of the circumferential end or edge of the contact lens into a smooth curved surface.

The *lens blank* 1201 is secured to the mounting tool 1203 with the adhesive agent 1202 using the blocking method as shown in Fig. 11, and has the front curve and the lentic curve machined and shaped. The mounting tool 1203 with the *lens blank* 1201 attached to it is mounted to the collet chuck 1204 and rotated at a high speed of about 6000 rpm in the direction of the arrow 1206 by the spindle 1205.

1207 is a soft abrasive material having resiliency which is made of moltplane, urethane foam, or the like. This polishing material is held by a holder 1208 and driven reciprocatively in the directions of the arrow 1213 by a crankshaft 1212 coupled to a rotary disc 1211 rotated in the direction of the arrow 1210 by a drive motor 1209.

Further, the polishing material 1207 is pressed against the *lens blank* 1201 with a given pressing force by a pressing means not shown. Accordingly, under this condition the edge can be machined into a desired smooth curved surface by reciprocating the polishing material 1207 four times or so per second at a shift of about 10 mm.

Although the edge of the *lens blank* 1201 as shown in the drawing sticks in the polishing material 1207 to deform it, the shape of the edge can be changed if the extent of deformation is varied by controlling the pressing force of the pressing means not shown, or the curved surface on the front curve side can be made different from that on the base curve side by changing the pressing force between the forward and the backward strokes of the polishing material 1207. In the embodiment, as described above, it became possible to form the edge of given shape readily and automatically by controlling the pressing force of the polishing material.

By the use of the foregoing machining means for cutting, polishing, and the like, it became possible to readily manufacture desired contact lenses with high accuracy without relying on the experience and feeling of skilled workers. Especially, the power became substantially perfect to cause no decrease of yield, and a high machining accuracy could be obtained even with respect to the base curve and the bevel for which a very severe accuracy is demanded; thus, it became possible to enhance the overall yield to 96% or more, in contrast to the prior art.

Further, an unmanned automated manufacturing line can be realized by connecting the individual machining means with auto convey means and effecting centralized control using control means such as a computer.

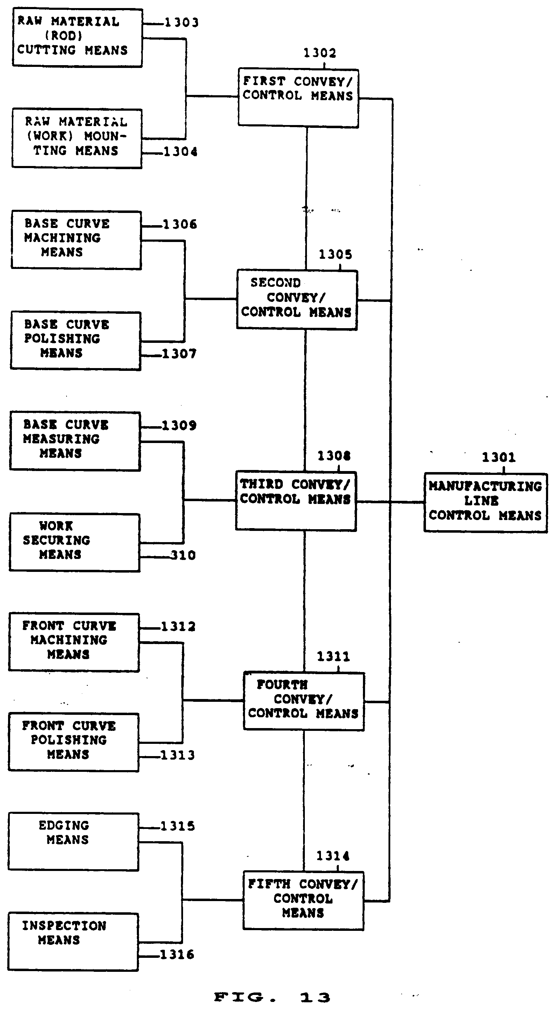

Fig. 13 shows such an automated manufacturing line. Supplied to a manufacturing line control means 1301 are the specification data of contact lenses based on the orders from retail shops and ophthalmic hospitals and based on the stock conditions, and other data, such as delivery date and client (delivery place), necessary for production management. The specification data include various data relating to the shape of contact lenses necessary to meet the prescription of patient's eyes, for example, the diameter of the lens, the base curve, and the power for standard products, and additionally, the radius of curvature and the width (inner diameter) of the secondary curve, the radius of curvature and the width (inner diameter) of the peripheral curve, the radius of curvature of the lentic curve, the center thickness, and the smoothness of blend for order made products.

Further, there is another data relating to the material of the contact lens that indicates, for example, whether it is hard or soft.

Here, the manhour for data entry can be reduced if the specification data of standard products are previously stored in the manufacturing line control means 1301 and if a necessary data part is retrieved upon designation of an item code.

The manufacturing line control means 1301, having the data of various contact lenses previously stored therein, sends an instruction of manufacture to each convey/control means in the order of delivery date.

A first convey/control means 1302 selects a contact lens raw rod of designated material and conveys it to a raw rod cutting means 1303 in accordance with the instruction from the manufacturing line control means 1301. The raw rod cutting means 1303 cuts the contact lens raw rod into button *lens blanks* of certain size as shown in Fig. 6(a), and a raw *lens blank* securing means 1304 bonds and secures the button to a mounting tool as shown in Fig. 6(b). The first convey/control means 1302 conveys the thus blocked *lens blank* to a second convey/control means 1305.

When the *lens blank* is conveyed from the first convey/control means 1302, the second convey/control means 1305 demands the manufacturing line control means 1301 to provide the specification data relating to that *lens blank*, and calculates the design data relating to the definite shape of the base curve and of the bevel on the basis of the specification data received. In the case of standard products, the design data relating to the optimum shape of the bevel are calculated in accordance with a preset expression on the basis of the outer diameter of the lens and the radius of curvature of the base curve. Here, instead of using such an expression, some data may be selected from the data relating to the shape of the bevel that is previously stored per item.

A base curve machining means 1306 machines and forms the base curve and the bevel using the cutting means as shown in Fig. 7 on the basis of the design data calculated, and a base curve polishing means 1307 polishes the surfaces of the thus formed base curve and bevel using the polishing means as shown in Fig. 9(a). The *lens blank* having been polished is conveyed to a third convey/control means 1308.

The third convey/control means 1308 conveys the *lens blank* received to a base curve measuring means 1309, and the base curve measuring means 1309 measures the radius of curvature of the base curve and the like using the method as shown in Fig. 10 and sends the measurement result to the manufacturing line control means 1301. A *lens blank* securing means 1310 secures the *lens blank* to the blocking or mounting tool using the method as shown in Fig. 11 on the basis of the measurement result. Of course, the mounting tool secured by the raw *lens blank* mounting means 1304 ⟨the foregoing processing⟩ is removed before . The third convey/control means 1308 conveys the thus mounted *lens blank* to a fourth convey/control means 1311.

When the *lens blank* is conveyed from the third convey/control means 1308, the fourth convey/control means 1311 requests the manufacturing line control means 1301 to provide the specification data relating to that *lens blank* and the measurement result obtained by the base curve measuring means 1309. Then, on the basis of the specification data and the measurement result, the radius of curvature of the front curve for attainment of a desired power and the radius of curvature of the lentic curve for attainment of a desired edge thickness are calculated to obtain the design data relating to the definite shape of the front curve and of the lentic curve.

A front curve machining means 1312 machines and forms the front curve and the lentic curve using the cutting means as shown in Fig. 7 on the basis of the design data calculated, and a front curve polishing means 1313 polishes the surfaces of the thus formed front curve and lentic curve using the method as shown in Fig. 9(b). The *lens blank* having been polished is conveyed to a fifth convey/control means 1314.

The fifth convey/control means 1314 conveys the thus received *lens blank* to an edging means 1315, and this edging means 1315 machines and forms the edge into a smooth curved surface using the method as shown in Fig. 12. An inspecting means 1316 inspects the shape, power, presence/absence of scratch, etc. of each curved surface of the contact lens having been machined, and provides the inspection result to the manufacturing line control means 1301. The power can be measured automatically using a well-known lens meter, and the shape, presence/absence of scratch, etc. of each curved surface can be inspected automatically using an optical projector and a picture processing device.

The manufacturing line control means 1301 judges the acceptance/rejection of the products on the basis of the inspection result and if necessary, provides an instruction of re-manufacture. In this way, the situation of a defective product having been manufactured can be dealt with quickly.

In addition to the foregoing functions, the individual convey/control means have the following functions. That is, when the specification data for a lens of high urgency are entered in the course of manufacture, the manufacturing line control means 1301 instructs each convey/control means to machine this lens first. In responce to this instruction, each convey/control means keeps the *lens blank* previously received on standby and conveys the *lens blank* then received of high urgency to each means of machining, polishing or the like. In this way, lenses of high urgency can be manufactured in a very short time by controlling each convey/control means in the foregoing manner.

As described above, the manufacturing line of the embodiment can manufacture the contact lenses of any material and any special shape without any modification of the manufacturing line and those classified as a typical small-quantity item at low costs.

Further, some order made products which hitherto needed three days from oder to delivery can be delivered on the next day or on the same day except for a remote place if a delivery system can be improved.

Although the embodiment has shown herein the method of machining the side of the base curve first, the present invention should not be limited to this embodiment. That is, the side of the front curve may be machined first, or the machining of the edge may be carried out concurrently with the machining of the side of the base curve or the front curve, either case leading to the same effectiveness.

As described above, according to the present invention, the shape of the curved surface first machined and formed out of the base curve and the front curve is measured and on the basis of the measurement result, the shape of the surface then being machined is determined. Thus, it becomes possible to manufacture a contact lens having a desired power with very high accuracy irrespective of whether the contact lens is a standard one or an order made one having curved surfaces of specific shapes.

Further, since the base curve and the bevel are concurrently machined in the same step, it becomes possible to form the base curve and the bevel demanding a very servere shape accuracy with very high machining accuracy, and it becomes possible to machine the base curve and the bevel of any shapes with similar accuracy and manhour.

Further, since a machining means is adopted which can deal with all contact lenses of various kinds of specification, it is possible to quickly deal with various requests from users in relation to specification to thereby manufacture desired contact lenses. Accordingly, the quality of the contact lens can be enhanced, the manufacturing cost can be reduced, various contact lenses satisfying a variety of prescription of patient's eyes can be manufactured, and any prescription for the contact lens can be settled.

## Claims

1. A method for manufacturing a contact lens by machining a lens blank (602) to a desired shape, comprising

   a) a first machining step of forming a base curve (301) and a bevel (303) having given shapes, on the basis of first given design data, and

   b) a second machining step of forming the front curve (302) and, if necessary, a lentic curve (306),
   c) a measuring step of measuring the radius of curvature (R1) of the base curve (301) formed in step a) and calculating, based on the measured radius of curvature (R1), the radius-of-curvature data of the front curve (302) required to attain a desired refractive power,

wherein:

step b) is executed on the basis of the radius-of-curvature data calculated in step c),
said first machining step comprises:

forming the base curve (301) and the bevel (303) by cutting and polishing the surface of the base curve (301) and the bevel (303) by pressing a soft polishing cloth (901), which is made of a soft material deformable in any shape, against the surface of the base curve (301) and the bevel (303) with fluid pressure, the fluid being blown against the backside of the polishing cloth (901), and causing relative motion between the lens blank (907) and the polishing cloth (901), and

said second machining step comprises:

forming the front curve (302) and the lentic curve (306) if necessary, by cutting, and polishing the surface of the front curve (302), and the surface of the lentic curve (306) formed when necessary, by pressing a soft polishing cloth (901), which is made of a soft material deformable in any shape, against the surface of the front curve (302), and the surface of the lentic curve (306) formed when necessary, with fluid pressure, the fluid being blown against the backside of the polishing cloth (901), and causing relative motion between the lens blank (907) and the polishing cloth (901).

2. A method for manufacturing a contact lens by machining a lens blank to a desired shape, comprising

a) a first machining step of forming a front curve (302) having a given radius of curvature (R2), and a lentic curve (306) if necessary, on the basis of given design data, and
b) a second machining step of forming the base curve (301) and a bevel (303),
c) a measuring step of measuring the radius of curvature (R2) of the front curve (302) formed in step a) and calculating the radius-of-curvature data of the base curve (301) required to attain a desired refractive power,
wherein:

step b) is executed on the basis of the radius-of-curvature data calculated in step c), said first machining step comprises:

forming the front curve (302) and the lentic curve (306) if necessary, by cutting, and polishing the surface of the front curve (302), and the surface of the lentic curve (306) formed when necessary, by pressing a soft polishing cloth (901), which is made of a soft material deformable in any shape, against the surface of the front curve (302), and the surface of the lentic curve (306) formed when necessary, with fluid pressure, the fluid being blown against the backside of the polishing cloth (901), and causing relative motion between the lens blank and the polishing cloth, and

said second machining step comprises:

forming the base curve (301) and the bevel (303) by cutting and polishing the surface of the base curve (301) and the bevel (303) by pressing a soft polishing cloth (901), which is made of a soft material deformable in any shape, against the surface of the base curve (301) and the bevel (303) with fluid pressure, the fluid being blown against the backside of the polishing cloth (901), and causing relative motion between the lens blank (907) and the polishing cloth.

3. The method according to claim 1 or 2, wherein after step c) and prior to step b) the lens blank (1102) is fixed to a given mounting tool (1101) by discharging a necessary amount of adhesive agent (1106) between the polished surface of the base curve (1103) and the mounting tool (1101), the necessary amount of adhesive agent (1106) being calculated on the basis of the shape of the curve (1103) formed in step a), the shape of the mounting tool (1101), and the height of adhesion ($t_7$).

4. An apparatus for manufacturing a contact lens by machining a lens blank to a desired shape, comprising

specification data output means (201),
first design data calculating means (202) for calculating first design data for the machining of a base curve and a bevel to given shapes on the basis of the specification data,

first machining means (204) for forming the base curve and the bevel on the basis of the first design data,

second design data calculating means (203) for calculating second design data for the machining of a front curve, and a lentic curve if necessary, to given shapes on the basis of the specification data, and

second machining means (206) for forming the front curve, and the lentic curve if necessary, on the basis of the second design data,

wherein

radius-of-curvature measuring means (205) are provided for measuring the radius-of-curvature of the base curve formed by said first machining means (204), and providing a measurement data,

said second design data calculating means (203) calculates said second design data on the basis of said specification data and the measurement data,

said specification data output means (201) selects and provides one out of a plurality of contact lens specification data sets on the basis of the prescription data of patient's eyes and/or a predetermined standard specification,

said first machining means comprises means for forming the base curve (301) and the bevel (303) by cutting and polishing the surface of the base curve (301) and the bevel (303) by pressing a soil polishing cloth (901), which is made of a soft material deformable in any shape, against the surface of the base curve (301) and the bevel (303) with fluid pressure, the fluid being blown against the backside of the polishing cloth (901), and causing relative motion between the lens blank (907) and the polishing cloth (901), and

said second machining means comprises means for forming the front curve (302) and the lentic curve (306), if necessary, by cutting, and polishing the surface of the front curve (302), and the surface of the lentic curve (306) formed when necessary, by pressing a soil polishing cloth (901), which is made of a soft material deformable in any shape, against the surface of the front curve (302), and the surface of the lentic curve (306) formed when necessary, with fluid pressure, the fluid being blown against the backside of the polishing cloth (901), and causing relative motion between the lens blank (907) and the polishing cloth (901).

5. An apparatus for manufacturing a contact lens by machining a lens blank to a desired shape, comprising

specification data output means (201),

first design data calculating means (203) for calculating first design data for the machining of a front curve, and a lentic curve if necessary, to given shapes on the basis of the specification data, and

first machining means (206) for forming the front curve, and the lentic curve if necessary, on the basis of the first design data,

second design data calculating means (202) for calculating second design data for the machining of a base curve and a bevel to given shapes on the basis of the specification data,

second machining means (204) for forming the base curve and the bevel on the basis of the second design data,

wherein

radius-of-curvature measuring means (205) are provided for measuring the radius-of-curvature of the front curve formed by said first machining means (206), and providing a measurement data, said second design data calculating means (203) calculates said second design data on the basis of said specification data and the measurement data,

said specification data output means (201) selects and provides one out of a plurality of contact lens specification data sets on the basis of the prescription data of patient's eyes and/or a predetermined standard specification,

said first machining means comprises means for forming the front curve (302) and the lentic curve (306) if necessary, by cutting, and polishing the surface of the front curve (302), and the surface of the lentic curve (306) formed when necessary, by pressing a soft polishing cloth (901), which is made of a soft material deformable in any shape, against the surface of the front curve (302), and the surface of the lentic curve (306) formed when necessary, with fluid pressure, the fluid being blown against the backside of the polishing cloth (901), and causing relative motion between the lens blank (907) and the polishing cloth (901), and

said second machining means comprises means for forming the base curve (301) and the bevel (303) by cutting and polishing the surface of the base curve (301) and the bevel (303) by pressing a soft polishing cloth (901), which is made of a soft material deformable in any shape, against the surface of the base curve (301) and the bevel (303) with fluid pressure, the fluid being blown against the backside of the polishing cloth (901), and causing relative motion between the lens blank (907) and the polishing cloth (901).

**Patentansprüche**

1. Verfahren zur Herstellung einer Kontaktlinse durch maschinelle Bearbeitung eines Linsenrohlings (602) zu einer gewünschten Form, umfassend

a) einen ersten Bearbeitungsschritt der Ausbildung einer Basiskurve (301) und einer Randschräge (303) mit gegebenen Formen auf der Basis erster gegebener Konstruktionsdaten, und
b) einen zweiten Bearbeitungsschritt der Ausbildung der Frontkurve (302) und, falls nötig, einer Lentikurve (306),
c) einen Meßschritt der Messung des Krümmungsradius (R1) der Basiskurve (301), die in Schritt a) ausgebildet wurde, und der Berechnung, basierend auf dem gemessenen Krümmungsradius (R1), der Krümmungsradiusdaten der Frontkurve (302), die zum Erhalt einer gewünschten Brechkraft erforderlich sind,
        wobei:

Schritt b) auf der Basis der in Schritt c) berechneten Krümmungsradiusdaten ausgeführt wird,
der erste Bearbeitungsschritt umfaßt:

Ausbilden der Basiskurve (301) und der Randschräge (303) durch Schneiden und Polieren der Oberflächen der Basiskurve (301) und der Randschräge (303) durch Anpressen eines weichen Poliertuchs (901), das aus einem weichen, in jede Form verformbaren Material hergestellt ist, gegen die Oberfläche der Basiskurve (301) und der Randschräge (303) mittels eines Fluiddrucks, wobei das Fluid gegen die Rückseite des Poliertuchs (901) geblasen wird, und Bewirken einer Relativbewegung zwischen dem Linsenrohling (907) und dem Poliertuch (901), und
und der zweite Bearbeitungsschritt umfaßt:
Ausbilden der Frontkurve (302) und der Lentikurve (306), falls nötig, durch Schneiden, und Polieren der Oberfläche der Frontkurve (302) und der Oberfläche der erforderlichenfalls ausgebildeten Lentikurve (306) durch Anpressen eines weichen Poliertuchs (901), das aus einem weichen, in jede Form verformbaren Material hergestellt ist, gegen die Oberfläche der Frontkurve (302) und die Oberfläche der erforderlichenfalls ausgebildeten Lentikurve (306) mittels eines Fluiddrucks, wobei das Fluid gegen die Rückseite des Poliertuchs (901) geblasen wird, und Bewirken einer Relativbewegung zwischen dem Linsenrohling (907) und dem Poliertuch (901).

2. Verfahren zur Herstellung einer Kontaktlinse durch maschinelle Bearbeitung eines Linsenrohlings zu einer gewünschten Form, umfassend

a) einen ersten Bearbeitungsschritt der Ausbildung einer Frontkurve (302) mit einem gegebenen Krümmungsradius (R2) und erforderlichenfalls einer Lentikurve (306) auf der Basis gegebener Konstruktionsdaten, und
b) einen zweiten Bearbeitungsschritt der Ausbildung der Basiskurve (301) und einer Randschräge (303)
c) einen Meßschritt der Messung des Krümmungsradius (R2) der im Schritt a) ausgebildeten Frontkurve (302) und der Errechnung der Krümmungsradiusdaten der Basiskurve (301), die zum Erhalt einer gewünschten Brechkraft erforderlich sind,
        wobei:

Schritt b) auf der Basis der in Schritt c) errechneten Krümmungsradiusdaten ausgeführt wird,
der erste Bearbeitungsschritt umfaßt:

Ausbilden der Frontkurve (302) und erforderlichenfalls der Lentikurve (306) durch Schneiden, und Polieren der Oberfläche der Frontkurve (302) und der Oberfläche der erforderlichenfalls ausgebildeten Lentikurve (306) durch Anpressen eines weichen Poliertuchs (901), das aus einem weichen, in jede Form verformbaren Material hergestellt ist, gegen die Oberfläche der Frontkurve (302) und die Oberfläche der erforderlichenfalls ausgebildeten Lentikurve (306) mittels eines Fluiddrucks, wobei das Fluid gegen die Rückseite des Poliertuchs (901) geblasen wird, und Bewirken einer Relativbewegung zwischen dem Linsenrohling und dem Poliertuch (901),

und der zweite Bearbeitungsschritt umfaßt:

Ausbilden der Basiskurve (301) und der Randschräge (303) durch Schneiden, und Polieren der Oberfläche der Basiskurve (301) und der Randschräge (303) durch Anpressen eines weichen Poliertuchs, das aus einem weichen, in jede Form verformbaren Material hergestellt ist, gegen die Oberfläche der Basiskurve (301) und der Randschräge (303) mittels eines Fluiddrucks, wobei das Fluid gegen die Rückseite des Poliertuchs (901) geblasen wird, und Bewirken einer Relativbewegung zwischen dem Linsenrohling (907) und dem Poliertuch (901).

3. Verfahren nach einem der Ansprüche 1 oder 2, bei dem nach Schritt c) und vor Schritt b) der Linsenrohling (1102) an einem gegebenen Montagewerkzeug (1101) dadurch fixiert wird, daß eine notwendige Menge Klebstoff (1106) zwischen die polierte Oberfläche der Basiskurve (1103) und das Montagewerkzeug (1101) geliefert wird, wobei die notwendige Menge des Klebstoffs (1106) auf der Basis der Form der in Schritt a) ausgebildeten Kurve (1103), der Form des Montagewerkzeugs (1101) und der Höhe der Verbindung ($t_7$) errechnet wird.

4. Vorrichtung zur Herstellung einer Kontaktlinse durch maschinelle Bearbeitung eines Linsenrohlings zu einer gewünschten Form, umfassend

eine Spezifikationsdatenausgabeeinrichtung (201),
eine erste Konstruktionsdatenberechnungseinrichtung (202) zur Errechnung erster Konstruktionsdaten zur maschinellen Bearbeitung einer Basiskurve und einer Randschräge zu gegebenen Formen auf der Basis der Spezifikationsdaten,
eine erste Bearbeitungseinrichtung (204) zur Ausbildung der Basiskurve und der Randschräge auf der Basis der ersten Konstruktionsdaten,
eine zweite Konstruktionsdatenberechnungseinrichtung (203) zur Errechnung zweiter Konstruktionsdaten zur maschinellen Bearbeitung einer Frontkurve und erforderlichenfalls einer Lentikurve zu gegebenen Formen auf der Basis der Spezifikationsdaten, und
eine zweite Bearbeitungseinrichtung (206) zur Ausbildung der Frontkurve und erforderlichenfalls der Lentikurve auf der Basis der zweiten Konstruktionsdaten,
wobei

eine Krümmungsradiusmeßeinrichtung (205) zur Messung des Krümmungsradius der mittels der ersten Bearbeitungseinrichtung (204) ausgebildeten Basiskurve und zur Lieferung eines Meßdatums vorgesehen ist,
die zweite Konstruktionsdatenberechnungseinrichtung (203) die zweiten Konstruktionsdaten auf der Basis der Spezifikationsdaten und des Meßdatums errechnet,
die Spezifikationsdatenausgabeeinrichtung (201) aus einer Vielzahl von Kontaktlinsenspezifikationsdatensätzen auf der Basis der Verschreibungsdaten für die Augen des Patienten und/oder einer vorbestimmten Standardspezifikation einen auswählt und liefert,
der erste Bearbeitungsschritt umfaßt eine Einrichtung zum Ausbilden der Frontkurve (302) und erforderlichenfalls der Lentikurve (306) durch Schneiden, und Polieren der Oberfläche der Frontkurve (302) und der Oberfläche der erforderlichenfalls ausgebildeten Lentikurve (306) durch Anpressen eines weichen Poliertuchs (901), das aus einem weichen, in jede Form verformbaren Material hergestellt ist, gegen die Oberfläche der Frontkurve (302) und die Oberfläche der erforderlichenfalls ausgebildeten Lentikurve (306) mittels eines Fluiddrucks, wobei das Fluid gegen die Rückseite des Poliertuchs (901) geblasen wird, und Bewirken einer Relativbewegung zwischen dem Linsenrohling und dem Poliertuch (901), und
der zweite Bearbeitungsschritt umfaßt eine Einrichtung zum Ausbilden der Basiskurve (301) und der Randschräge (303) durch Schneiden, und Polieren der Oberfläche der Basiskurve (301) und der Randschräge (303) durch Anpressen eines weichen Poliertuchs, das aus einem weichen, in jede Form verformbaren Material hergestellt ist, gegen die Oberfläche der Basiskurve (301) und der Randschräge (303) mittels eines Fluiddrucks, wobei das Fluid gegen die Rückseite des Poliertuchs (901) geblasen wird, und Bewirken einer Relativbewegung zwischen dem Linsenrohling (907) und dem Poliertuch (901).

5. Vorrichtung zur Herstellung einer Kontaktlinse durch maschinelle Bearbeitung eines Linsenrohlings zu einer gewünschten Form, umfassend

eine Spezifikationsdatenausgabeeinrichtung (201),
eine erste Konstruktionsdatenberechnungseinrichtung (203) zur Errechnung erster Konstruktionsdaten zur maschinellen Bearbeitung einer Frontkurve und erforderlichenfalls einer Lentikurve zu gegebenen Formen auf der Basis der Spezifikationsdaten,
eine erste Bearbeitungseinrichtung (206) zur Ausbildung der Frontkurve und erforderlichenfalls der Lentikurve auf der Basis der ersten Konstruktionsdaten,

eine zweite Konstruktionsdatenberechnungseinrichtung (202) zur Errechnung zweiter Konstruktionsdaten für die maschinelle Bearbeitung einer Basiskurve und einer Randschräge zu gegebenen Formen auf der Basis der Spezifikationsdaten, und

eine zweite Bearbeitungseinrichtung (204) zur Ausbildung der Basiskurve und der Randschräge auf der Basis der zweiten Konstruktionsdaten,
    wobei

eine Krümmungsradiusmeßeinrichtung (205) zur Messung des Krümmungsradius der mittels der ersten Bearbeitungseinrichtung (206) ausgebildeten Frontkurve und zur Lieferung eines Meßdatums vorgesehen ist,

die zweite Konstruktionsdatenberechnungseinrichtung (203) die zweiten Konstruktionsdaten auf der Basis der Spezifikationsdaten und des Meßdatums errechnet,

die Spezifikationsdatenausgabeeinrichtung (201) aus der Vielzahl von Kontaktlinsenspezifikationsdatensätzen auf der Basis der Verschreibungsdaten der Augen des Patienten und/oder einer vorbestimmten Standardspezifikation einen auswählt und liefert,

der erste Bearbeitungsschritt umfaßt eine Einrichtung zum Ausbilden der Frontkurve (302) und erforderlichenfalls der Lentikurve (306) durch Schneiden, und Polieren der Oberfläche der Frontkurve (302) und der Oberfläche der erforderlichenfalls ausgebildeten Lentikurve (306) durch Anpressen eines weichen Poliertuchs (901), das aus einem weichen, in jede Form verformbaren Material hergestellt ist, gegen die Oberfläche der Frontkurve (302) und die Oberfläche der erforderlichenfalls ausgebildeten Lentikurve (306) mittels eines Fluiddrucks, wobei das Fluid gegen die Rückseite des Poliertuchs (901) geblasen wird, und Bewirken einer Relativbewegung zwischen dem Linsenrohling und dem Poliertuch (901), und

der zweite Bearbeitungsschritt umfaßt eine Einrichtung zum Ausbilden der Basiskurve (301) und der Randschräge (303) durch Schneiden, und Polieren der Oberfläche der Basiskurve (301) und der Randschräge (303) durch Anpressen eines weichen Poliertuchs, das aus einem weichen, in jede Form verformbaren Material hergestellt ist, gegen die Oberfläche der Basiskurve (301) und der Randschräge (303) mittels eines Fluiddrucks, wobei das Fluid gegen die Rückseite des Poliertuchs (901) geblasen wird, und Bewirken einer Relativbewegung zwischen dem Linsenrohling (907) und dem Poliertuch (901).

## Revendications

1. Procédé de fabrication d'une lentille de contact par l'usinage d'une ébauche de lente (602) pour lui donner une forme souhaitée, comprenant :

    a) une première étape d'usinage consistant à former une courbe de base (301) et un biseau (303) ayant des formes données, sur la base de premières données de conception déterminées,
    b) une seconde étape d'usinage consistant à former la courbe avant (302), et si nécessaire une courbe de bord de lentille (306), et
    c) une étape de mesure consistant à mesurer le rayon de courbure (R1) de la courbe de base (301) qui est formée à l'étape a), et à calculer, sur la base du rayon de courbure (R1) mesuré, les données de rayon de courbure de la courbe avant (302) qui sont nécessaires pour obtenir le pouvoir de réfraction souhaité,

    l'étape b) étant exécutée sur la base des données de rayon de courbure qui sont calculées à l'étape c),
    la première étape d'usinage comprenant :

    la formation de la courbe de base (301) et du biseau (303) en taillant et en polissant la surface de la courbe de base (301) et du biseau (303), en pressant un tissu de polissage doux (901), qui est en un matériau doux déformable en n'importe quelle forme, contre la surface de la courbe de base (301) et du biseau (303), avec une pression de fluide, le fluide étant soufflé contre le côté arrière du tissu de polissage (901), et en produisant un mouvement relatif entre l'ébauche de lentille (907) et le tissu de polissage (901),

    et la seconde étape d'usinage comprenant :

    la formation de la courbe avant (302) et de la courbe de bord de lentille (306), si nécessaire, en taillant et en polissant la surface de la courbe avant (302), et la surface de la courbe de bord de lente (306), formée lorsque c'est nécessaire, en pressant un tissu de polissage doux (901), qui est en un matériau doux déformable en n'importe quelle forme, contre la surface de la courbe avant (302), et la surface de la courbe de bord de lentille (306) formée lorsque c'est nécessaire, avec une pression de fluide, le fluide étant soufflé contre le côté arrière du tissu de polissage (901), et en produisant un mouvement relatif entre l'ébauche de lentille (907) et le tissu de polissage (901).

2. Procédé de fabrication d'une lentille de contact par usinage d'une ébauche de lentille pour lui donner une forme souhaitée, comprenant :

a) une première étape d'usinage consistant à former une courbe avant (302) ayant un rayon de courbure donné (R2), et une courbe de bord de lentille (306), si nécessaire, sur la base de données de conception déterminées,
b) une seconde étape d'usinage consistant à former la courbe de base (301) et un biseau (303), et
c) une étape de mesure consistant à mesurer le rayon de courbure (R2) de la courbe avant (302) formée à l'étape a), et à calculer les données de rayon de courbure de la courbe de base (301) qui sont nécessaires pour obtenir le pouvoir de réfraction souhaité,

dans lequel l'étape b) est exécutée sur la base des données de rayon de courbure qui sont calculées à l'étape c),
la première étape d'usinage comprenant :

la formation de la courbe avant (302) et de la courbe de bord de lentille (306), si nécessaire, en taillant et en polissant la surface de la courbe avant (302), et la surface de la courbe de bord de lentille (306), qui est formée lorsque c'est nécessaire, en pressant un tissu de polissage doux (901), qui est en un matériau doux déformable en n'importe quelle forme, contre la surface de la courbe avant (302), et la surface de la courbe de bord de lentille (306) qui est formée lorsque c'est nécessaire, avec une pression de fluide, le fluide étant soufflé contre le côté arrière du tissu de polissage (901), et en produisant un mouvement relatif entre l'ébauche de lentille et le tissu de polissage (901),

et la seconde étape d'usinage comprenant :

la formation de la courbe de base (301) et du biseau (303) en taillant et en polissant la surface de la courbe de base (301) et du biseau (303), en pressant un tissu de polissage doux, qui est en un matériau doux déformable en n'importe quelle forme, contre la surface de la courbe de base (301) et le biseau (303), avec une pression de fluide, le fluide étant soufflé contre le côté arrière du tissu de polissage (901), et en produisant un mouvement relatif entre l'ébauche de lentille (907) et le tissu de polissage (901).

3. Procédé selon l'une quelconque des revendications 1 à 2, dans lequel, après l'étape c) et avant l'étape b), on fixe l'ébauche de lentille (1102) sur un outil de montage (1101) donné, en faisant couler une quantité nécessaire d'agent adhésif (1106) entre la surface polie de la courbe de base (1103) et l'outil de montage (1101), la quantité nécessaire d'agent adhésif (1106) étant calculée sur la base de la forme de la courbe (1103) qui est formé à l'étape a), de la forme de l'outil de montage (1101), et de la hauteur d'adhérence ($t_7$).

4. Dispositif de fabrication d'une lentille de contact par l'usinage d'une ébauche de lentille pour lui donner une forme souhaitée, comprenant

des moyens de sortie de données de spécification (201),
des premiers moyens de calcul de données de conception (202), destinés à calculer des premières données de conception pour l'usinage d'une courbe de base et d'un biseau de façon à obtenir des formes données, sur la base des données de spécifications,
des premiers moyens d'usinage (204) pour former la courbe de base et le biseau sur la base des premières données de conception,
des seconds moyens de calcul de données de conception (203) pour calculer des secondes données de conception pour l'usinage d'une courbe avant, et d'une courbe de bord de lentille, si nécessaire, pour obtenir des formes données, sur la base des données de spécifications, et
des seconds moyens d'usinage (206) pour former la courbe avant, et la courbe de bord de lentille, si nécessaire, sur la base des secondes données de conception,
dans lequel
des moyens de mesure de rayon de courbure (205) sont incorporés pour mesurer le rayon de courbure de la

17

courbe de base qui est formée par les premiers moyens d'usinage (204), et pour fournir des données de mesure,

les seconds moyens de calcul de données de conception (203) calculent les secondes données de conception sur la base des données de spécifications et des données de mesure, et

les moyens de sortie de données de spécifications (201) sélectionnent et fournissent un ensemble de données de spécifications parmi plusieurs ensembles de données de spécifications de lentille de contact, sur la base des données de prescription concernant les yeux du patient, et/ou d'une spécification standard prédéterminée, les premiers moyens d'usinage comportent des moyens destinés à former la courbe de base (301) et le biseau (303) en pressant un tissu de polissage doux (901), qui est en un matériau doux déformable en n'importe quelle forme, contre la surface de la courbe de base (301) et du biseau (303) avec une pression de fluide, le fluide étant soufflé contre le côté arrière du tissu de polissage (901), et en produisant un mouvement relatif entre l'ébauche de lentille (907) et le tissu de polissage (901), et

les seconds moyens d'usinage comportent des moyens destinés à former la courbe avant (302) et la courbe de bord de lente (306), si nécessaire, en taillant et en polissant la surface de la courbe avant (302) et la surface de la courbe de bord de lentille (306), formée lorsque c'est nécessaire, en pressant un tissu de polissage doux (901) en un matériau doux déformable en n'importe quelle forme, contre la surface de la courbe avant (302) et la surface de la courbe de bord de lentille (306), formée lorsque c'est nécessaire, avec une pression de fluide, le fluide étant soufflé contre le côté arrière du tissu de polissage (901), et en produisant un mouvement relatif entre l'ébauche de lentille (907) et le tissu de polissage.

5. Dispositif de fabrication d'une lentille de contact par l'usinage d'une ébauche de lentille pour lui donner une forme souhaitée, comprenant :

des moyens de sortie de données de spécifications (201),

des premiers moyens de calcul de données de conception (202), pour calculer des premières données de conception pour l'usinage d'une courbe avant, et d'une courbe de bord de lentille si nécessaire, pour obtenir des formes données sur la base des données de spécifications,

des premiers moyens d'usinage (206) pour former la courbe avant, et la courbe de bord de lentille si nécessaire, sur la base des premières données de conception,

des seconds moyens de calcul de données de conception (202) pour calculer des secondes données de conception pour l'usinage d'une courbe de base et d'un biseau, pour obtenir des formes données, sur la base des données de spécifications,

des seconds moyens d'usinage (204) pour former la courbe de base et le biseau sur la base des secondes données de conception,

dans lequel

des moyens de mesure de rayon de courbure (205) sont incorporés pour mesure le rayon de courbure de la courbe avant qui est formée par les premiers moyens d'usinage (206), et pour fournir des données de mesure,

les seconds moyens de calcul de données de conception (203) calculent les secondes données de conception sur la base des données de spécifications et des données de mesure, et

les moyens de sortie de données de spécifications (201) sélectionnent et fournissent un ensemble de données de spécifications parmi plusieurs ensembles de données de spécifications de lentille de contact, sur la base des données de prescription concernant les yeux du patient, et/ou d'une spécification standard prédéterminée,

les premiers moyens d'usinage comportent des moyens destinés à former la courbe avant (302) et la courbe de bord de lentille (306), si nécessaire, en taillant et en polissant la surface de la courbe avant (302) et la surface de la courbe de bord de lentille (306), formée lorsque c'est nécessaire, en pressant un tissu de polissage doux (901) en un matériau doux déformable en n'importe quelle forme, contre la surface de la courbe avant (302) et la surface de la courbe de bord de lentille (306), formée lorsque c'est nécessaire, avec une pression de fluide, le fluide étant soufflé contre le côté arrière du tissu de polissage (901), et en produisant un mouvement relatif entre l'ébauche de lentille (907) et le tissu de polissage, et

les seconds moyens d'usinage comportent des moyens destinés à former la courbe de base (301) et le biseau (303) en taillant et en polissant la surface de la courbe de base (30) et du biseau, en pressant un tissu de polissage doux (901), qui est en un matériau doux déformable en n'importe quelle forme, contre la surface de la courbe de base (301) et du biseau (303) avec une pression de fluide, le fluide étant soufflé contre le côté arrière du tissu de polissage (901), et en produisant un mouvement relatif entre l'ébauche de lentille (907) et le tissu de polissage (901).

FIRST MACHINING STEP —— 101

RADIUS-OF CURVATURE
MEASURING ——102

SECOND MACHINING STEP ——103

EDGING STEP ——104

FIG. 1

```
                                    ┌─────────────────┐
                                    │ FIRST DESIGNING │
                                    │ DATA CALCULATING├──202
                                    │      MEANS      │
                                    └────────┬────────┘
                                             ▲
         ┌──────────────┐          ┌─────────┴───────┐
         │    FIRST     │          │  SPECIFICATION  │
  204────┤  MACHINING   │          │   DATA OUTPUT   ├──201
         │    MEANS     │          │      MEANS      │
         └──────┬───────┘          └─────────────────┘
                ▼
         ┌──────────────┐
         │RADIUS-OF-CUR-│
  205────┤VATURE MEASU- │
         │ RING MEANS   │
         └──────┬───────┘
                ▼
         ┌──────────────┐          ┌─────────────────┐
         │    SECOND    │          │  SECOND DESIGN  │
  206────┤  MACHINING   │◄─────────┤DATA CALCULATION ├──203
         │    MEANS     │          │      MEANS      │
         └──────┬───────┘          └─────────────────┘
                ▼
         ┌──────────────┐
  207────┤ EDGING MEANS │
         └──────────────┘
```

F I G .  2

20

301: BASE CURVE
302: FRONT CURVE
303: BEVEL
304: SECONDARY CURVE
305: PERIPHERAL CURVE
306: LENTIC CURVE
307: EDGE THICKNESS
308: CENTER THICKNESS

R1: RADIUS OF CURVATURE
OF BASE CURVE
R2: RADIUS OF CURVATURE
OF FRONT CURVE
R3: RADIUS OF CURVATURE
OF SECONDARY CURVE
R4: RADIUS OF CURVATURE
OF PERIPHERAL CURVE
R5: RADIUS OF CURVATURE
OF LENTIC CURVE

FIG. 3(a)

FIG. 3(b)

21

EYELID  404

CONTACT LENS  401

402 CORNEA

TEAR LIQUID 403
FILM

404

FIG. 4

```
┌─────────────────────────┐
│  CUTTING OF RAW         │——501
│  MATERIAL (ROD)         │
└─────────────────────────┘
            │
            ▼
┌─────────────────────────┐
│  BASE CURVE CUTTING     │——502
└─────────────────────────┘
            │
            ▼
┌─────────────────────────┐
│  BASE CURVE POLISHING   │——503
└─────────────────────────┘
            │
            ▼
┌─────────────────────────┐
│  FRONT CURVE CUTTING    │——504
└─────────────────────────┘
            │
            ▼
┌─────────────────────────┐
│  FRONT CURVE POLISHING  │——505
└─────────────────────────┘
            │
            ▼
┌─────────────────────────┐
│  BEVEL GRINDING         │——506
└─────────────────────────┘
            │
            ▼
┌─────────────────────────┐
│  EDGING                 │——507
└─────────────────────────┘
```

FIG. 5

**602** BUTTON  **601** RAW COLUMNAR ROD

**F I G .  6 ( a )**

**602** BUTTON

**605** CUTTING TOOL

**606** BASE CURVE

**604** COLLET CHUCK

**F I G .  6 ( b )**

**604**

**602**

**606**

**607** POLISHING TOOL

**F I G .  6 ( c )**

FIG. 6(d)

FIG. 6(e)

701: LENS BLANK
702: COLLET CHUCK
703: SPINDLE
704: SPINDLE DRIVE MOTOR
705: MOTOR ROTATING DIRECTION
706: X-Y TABLE
708: X-AXIS DIRECTION
710: Y-AXIS DIRECTION
711: TOOL
712: TOOL TABLE
714: R-AXIS DIRECTION
715: ROTARY TABLE
716: θ-AXIS DIRECTION
717: STATIONARY BASE

FIG. 7

FIG. 8

FIG. 9(a)

FIG. 9(b)

FIG. 10

FRONT-SIDE END
SURFACE        1108          1102 LENS BLANK

1104 BEVEL

1103 BASE CURVE

R6

1105
BONDING
SURFACE

t5

1101 MOUNTING TOOL

t1   t7   1106 ADHESIVE AGENT

1107
OPTICAL CENTER

FIG. 11

COLLET
CHUCK
1204

1205
SPINDLE

1203 MOUNTING TOOL

1201 LENS BLANK DRIVE MOTOR
1209

1202
ADHESIVE
AGENT

1210

1211
ROTARY
DISK

1206

1207

1208

1213

1212
CRANKSHAFT

FIG. 12

RAW MATERIAL (ROD) CUTTING MEANS —1303

RAW MATERIAL (WORK) MOUNTING MEANS —1304

1302
FIRST CONVEY/ CONTROL MEANS

BASE CURVE MACHINING MEANS —1306

BASE CURVE POLISHING MEANS —1307

1305
SECOND CONVEY/ CONTROL MEANS

BASE CURVE MEASURING MEANS —1309

WORK SECURING MEANS —310

1308
THIRD CONVEY/ CONTROL MEANS

1301
MANUFACTURING LINE CONTROL MEANS

FRONT CURVE MACHINING MEANS —1312

FRONT CURVE POLISHING MEANS —1313

1311
FOURTH CONVEY/ CONTROL MEANS

EDGING MEANS —1315

INSPECTION MEANS —1316

1314
FIFTH CONVEY/ CONTROL MEANS

FIG. 13